# EUROPEAN PATENT SPECIFICATION

(11) **EP 2 941 714 B1**
(45) Date of publication and mention of the grant of the patent: **13.05.2020**
(21) Application number: 14735411.2
(22) Date of filing: 02.01.2014
(51) Int. Cl.: H04L 29/06, G06F 21/56, H04W 4/029

(54) **METHOD AND APPARATUS FOR IDENTIFYING COMPUTING RESOURCE TRAJECTORY**
VERFAHREN UND VORRICHTUNG ZUR PFADIDENTIFIKATION VON COMPUTERRESSOURCEN
PROCÉDÉ ET APPAREIL D'IDENTIFICATION ET DE PRÉSENTATION DE TRAJECTOIRE DE RESSOURCE INFORMATIQUE

(30) Priority: 02.01.2013 US 201361748277 P
(43) Date of publication of application: 11.11.2015
(73) Proprietor: Cisco Technology, Inc., San Jose, CA 95134-1706 (US)
(72) Inventor: LEVY, Elias, Columbia Maryland 21046 (US); HUGER, Alfred, Columbia Maryland 21046 (US); FRIEDRICHS, Oliver, Columbia Maryland 21046 (US); RAMZAN, Zulfikar, Columbia Maryland 21046 (US)
(74) Representative: Mathys & Squire
(86) International application number: PCT/US2014/010055
(87) International publication number: WO 2014/107500

(56) References cited:
- WO-A1-2012/075336
- WO-A2-2007/009009
- GB-A- 2 485 622
- US-A1- 2006 253 685
- US-A1- 2008 127 346
- US-A1- 2012 079 596
- US-A1- 2012 131 593
- US-A1- 2012 210 422
- US-B1- 7 934 261
- US-B1- 8 181 247
- US-B2- 8 051 180

## Description

### Field of the Invention

The present invention relates to identifying resources among a plurality of computing systems as well as information about a given resource within a particular computing system and presenting the results.

### Background of the Invention

It is known in the art that across a plurality of computing systems there may be a vast number of computing related resources. Examples of such resources include files, file names, registry keys, entries in network communications logs, different network hosts that a system connected to, email addresses of correspondents, etc. It might be desirable for an information technology administrator to obtain trajectory information about these resources - that is how particular resources appeared both within a particular system as well as across a plurality of systems under the purview of the administrator, including relationships between these resources (e.g., on User A's system, a file B communicated with a network host C, and this same file B also appeared on User D's system, etc.).

For example, for a given file, an administrator might like to know which systems is that file on, when it got on those systems, how it got on those systems, and what it did on those systems. This information would be useful in the context of understanding and containing malicious software (malware) outbreaks on those systems. In particular, knowing what systems were touched by that malware would allow the administrator to determine which systems must be cleaned up. Moreover, by knowing what happened on those systems, the administrator can determine the severity of the outbreak (e.g., was this malware more of a nuisance or was critical information exfiltrated). Finally, by understanding how that malware got onto the system, future preventative actions can be undertaken. For example, if the malware got onto that system because a security vulnerability on a particular application was exploited, then upgrading/patching the vulnerable application in question would prevent a future similar outbreak.

A similar example exists in the context of network related information. Here, an administrator might wish to know which systems visited a particular Internet Protocol address, when they visited that address, and what happened following that visit.

Information about multiple resources can be combined. For example, a given file might, when executed, communicate with a given network host. A file might also create additional files.

Moreover, information about a particular resource on a given system can be looked at in more detail - such as the actions of a given file on a given system, in this case, the administrator might be more interested in extensive details regarding what happened on a particular system rather than what happened across a plurality of systems with respect, to a particular resource. Without this type of trajectory information, it is difficult for an incident response team to know how serious a particular threat is, what the magnitude of a particular outbreak is, which systems were affected, what the threat did on a given system, how to remediate the effects of the threat, and what actions should be taken to proactively defend against similar outbreaks in the future.

US 2012/079596 discloses a method of detecting malicious software (malware) that includes receiving a file and storing a memory baseline for a system. The method also includes copying the file to the system, executing the file on the system, terminating operation of the system, and storing a post-execution memory map. The method further includes analyzing the memory baseline and the post-execution memory map and determining that the file includes malware. US 8,181,247 discloses a method comprising: monitoring events of execution of one or more processes on a computer; identifying auditable events among the monitored events, including events of creation, alteration or deletion of files, events of alteration of system registry, and events of network access by processes executed on the computer; recording the identified auditable events in separate file, registry and network event logs; performing a malware check of one or more software objects on the computer; if an object is determined to be malicious, identifying from the file, registry and network event logs the events associated with the malicious object; performing rollback of file events associated with the malicious object; performing rollback of registry events associated with the malicious object; terminating network connections associated with the malicious object. WO 2012/075336 discloses a method that uses important contextual information from a client system (such as recent history of events on that system), machine learning techniques, the automated deployment of generic signatures, and combinations thereof, to detect malicious software. GB 2 485 622 discloses a malware detection method that determines whether a malware exists in a user device. A server connects with the user device via a network, and execution records, such as system calls, of the user device are recorded and stored into a recording list. Based on the history of the execution records of the user device, the server can detect whether the user device has malwares or not. WO 2007/009009 discloses a system that includes a malware detection module configured to determine that a protected computer includes malware. The system also includes a history log module configured to access a history log of the protected computer to identify a set of potential sources of the malware.

There is, accordingly, a need in the art to develop methods, components, and systems for identifying and presenting information about computing resource trajectory.

### Summary of the invention

This object is solved by a method having the features of claim 1, an apparatus having the features of claim 8 and by a computer readable medium having the features of claim 10. Advantageous embodiments thereof are defined in the respective dependent claims.

In summarizing the invention, a system-level view is given, and then the components comprising that system as well as the methods to be executed on those components are described. It is to be understood that in addition to the overall system, the invention disclosed also separately comprises the individual underlying components used in the system as well as individual methods that would be executed on those components.

According to one aspect of the present invention, a system is provided that can be used to identify and present information about computing resource. The system comprises: (1) a client component that gathers information about specific resources on given computing devices (e.g., files, registry keys, specific facets of network activity, etc.); (2) a server component that gathers this data from the client and intelligently stores the results for further processing; (3) an optional data processing component that does initial processing of this data to facilitate future presentation of this information; (4) a results server that can be accessed by a user of the system that provides data pertaining to information about these resources, such as what actions and activities are associated with these resources, what metadata is associated with these resources, what systems (and locations within specific systems) these resources are seen on, and how these resources are related to each other (this server may perform additional processing of the data and also handles visualization aspects to ensure that the data is presented in a meaningful and useful way); (5) a client that displays the data provided by the results server.

Note that there will be a plurality of client components in the system since resources will typically be tracked across a plurality of end-user systems, though even if there were a single client, it is still valuable to understand what a particular resource did on that client (i.e., what actions it took and what metadata was associated with that resource). Note also that there may be a plurality of server components, data processing components, and results server components, primarily to ensure that any requisite systems are available when needed (since systems can occasionally fail) and also to facilitate computing (since large amounts of data might need to be processed and it might be easier to practically do so if the work is suitably divided among multiple components, recognizing that there may be challenges in doing so.)

According to another aspect of this invention, a **resource information extraction component** is provided. This component will typically be implemented on a client system. Computing-related resource data can be extracted on a client system. On a client system, the **resource information extraction component** can identify resources of interest on the system (e.g., newly downloaded files, new files written to the file system, new registry keys, new network hosts connected to by the system) and extract relevant data about these resources for the purposes of helping to provide subsequent trajectory information. The resources extracted can include one or more of the following: (1) A full file; (2) A partial file; (3) A full-file one-to-one fingerprint (i.e., a small fingerprint that can be used to identify the file and that we expect to be unique such as a SHA-256 hash of the file); (4) A full-file fuzzy fingerprint (a fuzzy fingerprint allows for a many-to-one match); (5) contextual information about how that resource, such as how it might have arrived on the system in the first place (e.g., in the case of a file, information about the parent file that was responsible for that file being written can be recorded); (6) information about related resources (e.g., in the case of file, information about other files on that system that might have been written to the file system recently); (7) A feature vector comprising a set of static and dynamic features extracted from the file itself as well as determined by examining the file's behavior; metadata can range from a few select features of the file all the way to the binary contents of the file itself. The metadata can also include contextual information from the system. The metadata, including possibly the whole file, is passed to a server-side component.

According to another aspect of the present invention, a server-side **logging component** receives data from a **resource information extraction** component (e.g., a component residing a client system) and logs this information together with any additional transactional information such as a timestamp (computed by the server) for when this data was received. This server-side logging component should also receive a client identifier to help identify which system transmitted the resource information provided by the resource information extraction component. This client identifier can be any means by which transactions from a given client system can be linked. This server-side logging component will log the resource information, timestamp, and client identifier. The data will be logged to facilitate future analysis of this information.

For example, the client identifier and timestamp should each be recorded as separate fields on a given entry or record of the log and the resource information should be logged in a format that can be easily parsed and analyzed. For example, information about each resource can be stored in a separate field or if some form of nesting or hierarchy is needed, then the resource information can be stored as a JSON blob. Note that this logging component will effectively have a record of what resources reside on what end user systems and more specifically, the time that those resources were recorded to be on those systems.

According to another aspect of the present invention an optional server-side **data processing module** is provided that examines data from the **logging component** and performs initial processing on the data for future analysis. This component analyzes one or more log files, extracts out resource fields, performs initial processing of that data to facilitate future reporting. This component also cross references information about this resource with any back-end intelligence about this resource (e.g., if the resource is a file, then it can be checked whether that file appears on any blacklists of known malware or if it appears on any whitelists of known clean files) and then stores the results in a **results data store.**

According to another aspect of the present invention a **results server module** may be provided that can access data from the results data store and provides a report on that data, possibly in response to a user-initiated query. For a particular resource, the report includes, but: is not necessarily limited to, the following pieces of information (or any subset of this information): what endpoint systems have this particular resource, when that resource was first detected on that system, any actions associated with that resource on that system, any metadata associated with that resource on that system, relationships to other types of resources, and information about how that resource arrived on that system.

The report generated by the results server module can be interactive; for example, rather than displaying the full breadth of information up front, it can provide a condensed summary view, and require the user click on that view to expand it for more information. Moreover, some of that information can itself be clicked on to generate a separate report. For example, if the resource in question is a file, then the initial report might include information about its parent file (where the parent file wrote the file in question to the file system). The user can then drill in on the information displayed about the parent file (e.g., by clicking on it with their mouse or tapping on it in the case of a touch screen, etc.) and can thus generate a separate trajectory report for it. Such an interactive report could be implemented through numerous techniques known in the art, such as HTML and JavaScript.

The report generated by the results server module could also report on information about different categories of resources, possibly that are related to each other. For example, the system's user might initially be interested in trajectory information about a particular file, as determined by its full file fingerprint. Seeing this trajectory report, the user might then wish to see a trajectory report for any file whose fuzzy fingerprint matches that of the original file. Further, seeing what registry keys are associated with a given file, the user might wish to see trajectory reports of that particular key, and so on.

The report can provide either a view across a plurality of systems (with an option to drill into more detail as mentioned above), or if the user requests it, the report can provide a view of what happened on a particular system, providing details about the actions associated with particular resources on that particular system.

According to another aspect of the present invention, a **resource information extraction method** is provided for extracting relevant resource data from a given endpoint system in a way that allows for subsequent analysis of resource trajectory. This method can be executed on a client (in which case the corresponding resource data can be transmitted to a server), or can be executed on a server (in which case the resource would be transmitted from a client to a server first; for example, if the resource of interest is a file, then either a fingerprint can be computed directly on the file and transmitted to a server or the entire file can be transmitted to server and the server itself can extract a fingerprint), or some combination thereof (e.g., some pieces of data related to the resource can be collected on the client, and other pieces of data can be extracted on a server).

Note that there is a tradeoff here; transmitting more data to a server incurs a bandwidth cost, but on the flip side leaves open the door for more possibilities around what data can be extracted without necessitating a change to underlying processing logic on each endpoint executing the resource information extraction method.

The resource information extraction method is carried out by processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist

According to another aspect of the present invention, a **resource data logging method** is provided for logging resource data on a server (or plurality of servers) and storing it in a way that facilitates reporting on resource trajectory. In one embodiment of the present invention, this method will be performed on the server by processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a **resource data processing method** is provided for processing data on a server and storing that data in a data store in a manner that facilitates determining resource trajectory. In one embodiment of the present invention, this method will be performed processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a **resource data reporting method** is provided for taking resource data stored in a data store and producing trajectory reports on that data. This method can be executed on a server (in which case the all reports are created and displayed on a server), or can be executed on a client (in which case the data to generate the report would first be transmitted to the client and the client would create and render the report), or some combination thereof (e.g., the report can be generated on a server and transmitted to a client that renders it; in this case, the server might be a web server that generates HTML and JavaScript code that is transmitted to a client and the client can render that code within a web browser).

In one embodiment of the present invention, this **resource data reporting** method will be performed processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

### Description of the Drawings

The present invention will be understood more fully from the detailed description given below and from the accompanying drawings of various embodiments of the invention, which, however, should not be taken to limit the invention to the specific embodiments, but are for explanation and understanding only.

The subsequent description of the preferred embodiments of the present invention refers to the attached drawings, wherein:

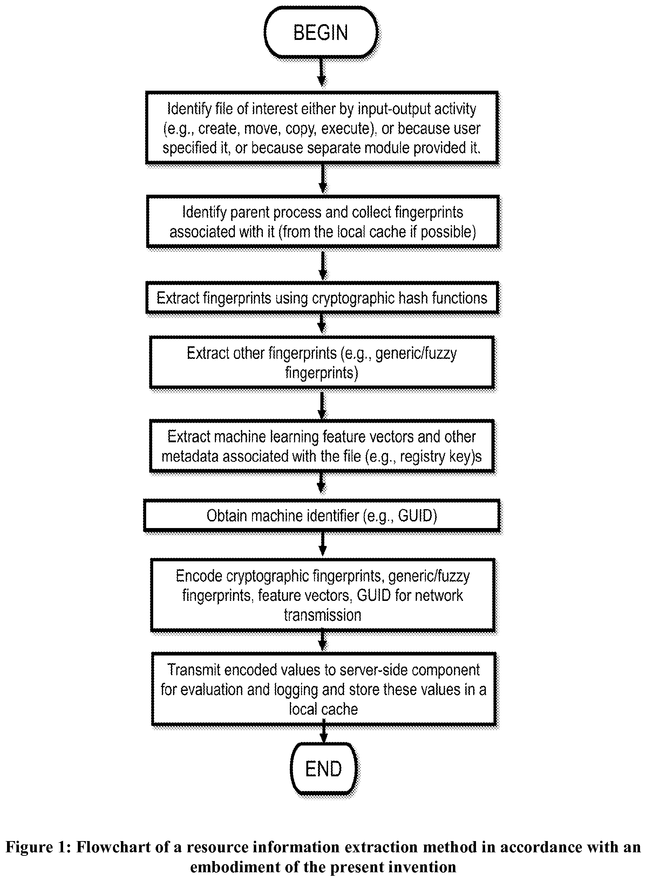

Figure 1 is a flowchart of a meta-data extraction method in accordance with an embodiment of the present invention.

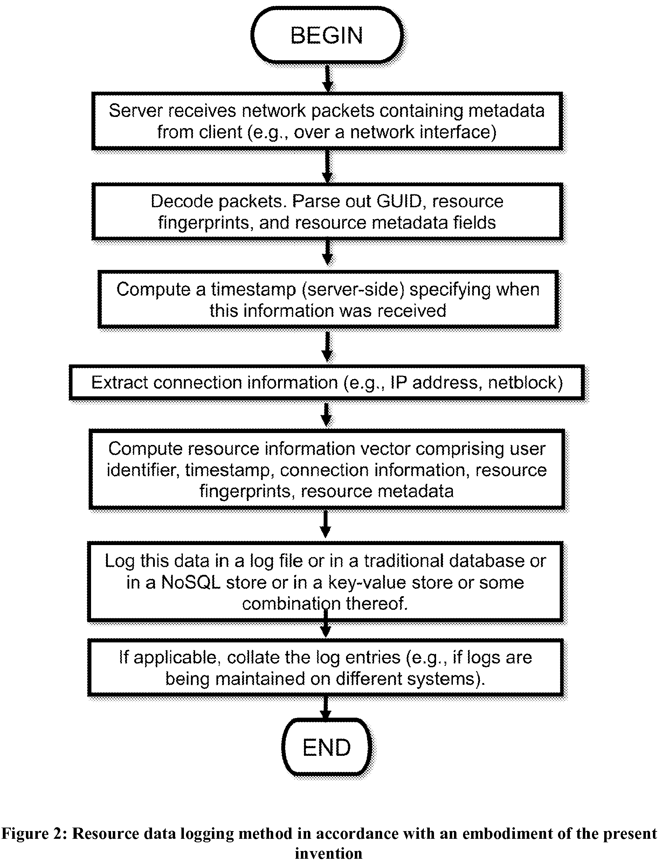

Figure 2 is a flowchart of a resource data logging method in accordance with an embodiment of the present invention.

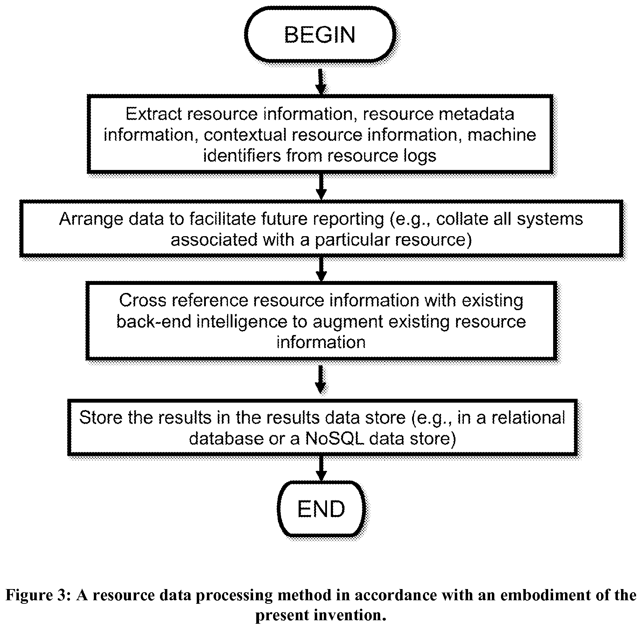

Figure 3 is a flowchart of a resource data processing method in accordance with an embodiment of the present invention.

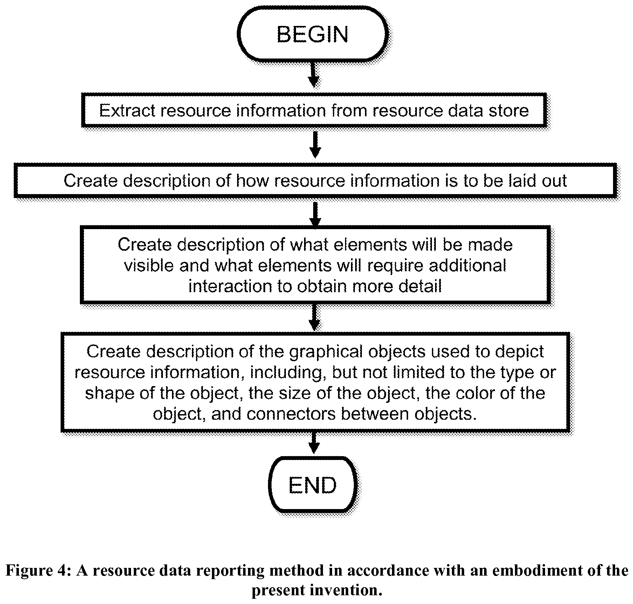

Figure 4 is a flowchart of a resource data reporting method in accordance with an embodiment of the present invention.

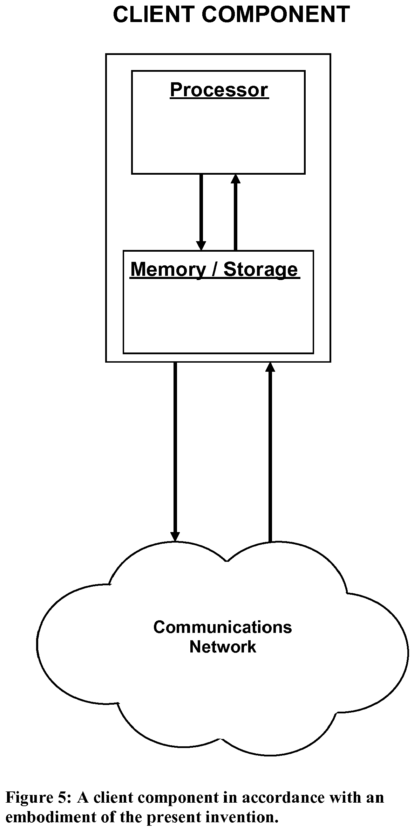

Figure 5 is a client component in accordance with an embodiment of the present invention.
Figure 6 is a server component in accordance with an embodiment of the present invention.

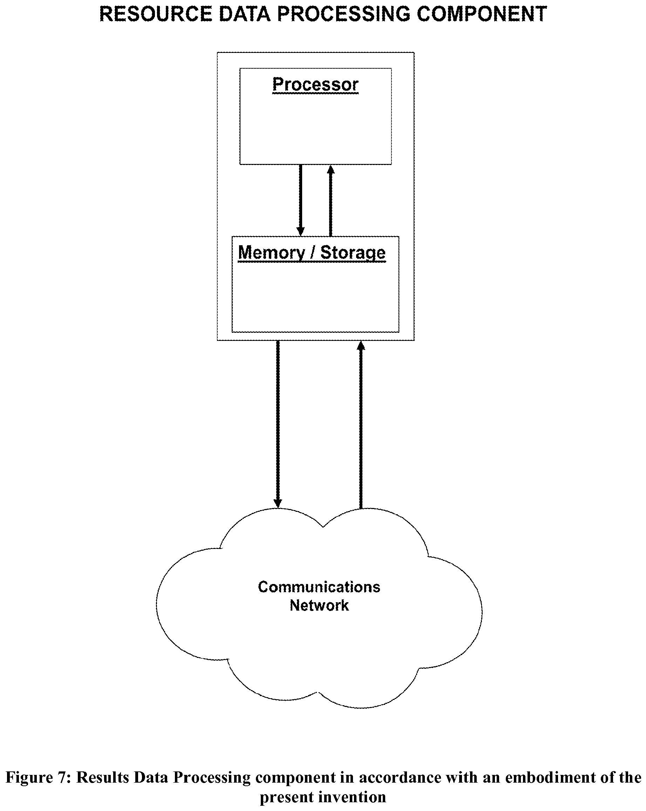

Figure 7 is a resource data processing component in accordance with an embodiment of the present invention,

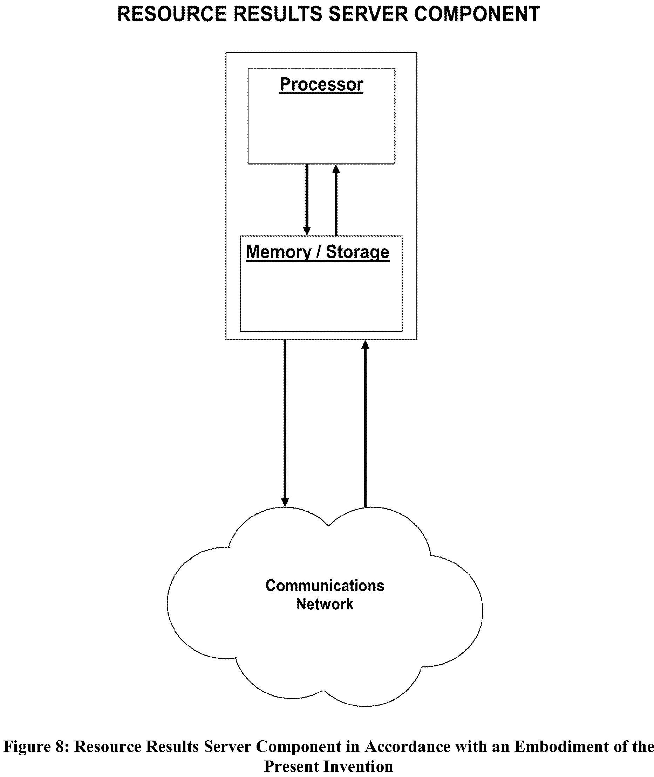

Figure 8 is a resource results server component in accordance with an embodiment of the present invention.

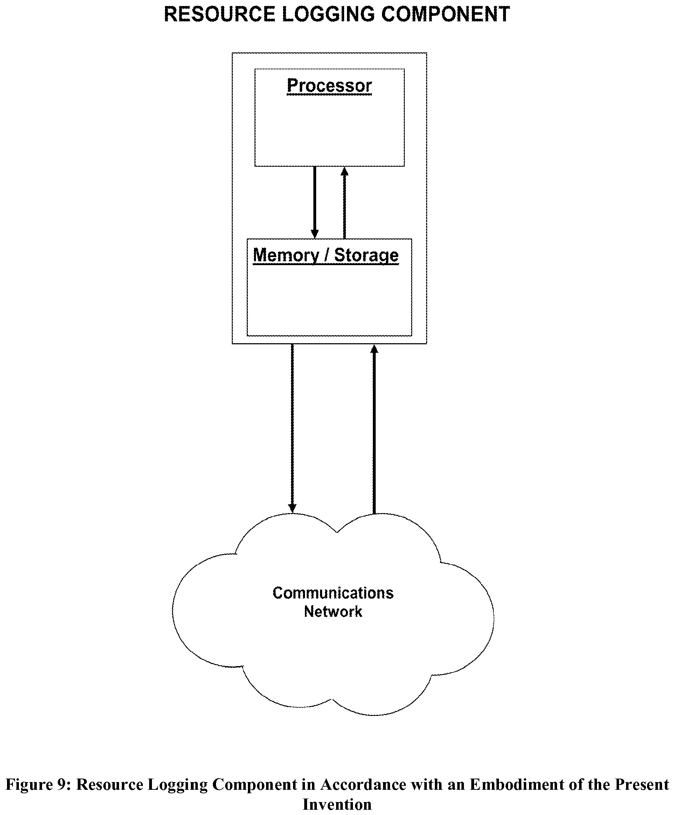

Figure 9 is a resource logging component in accordance with an embodiment of the present invention.

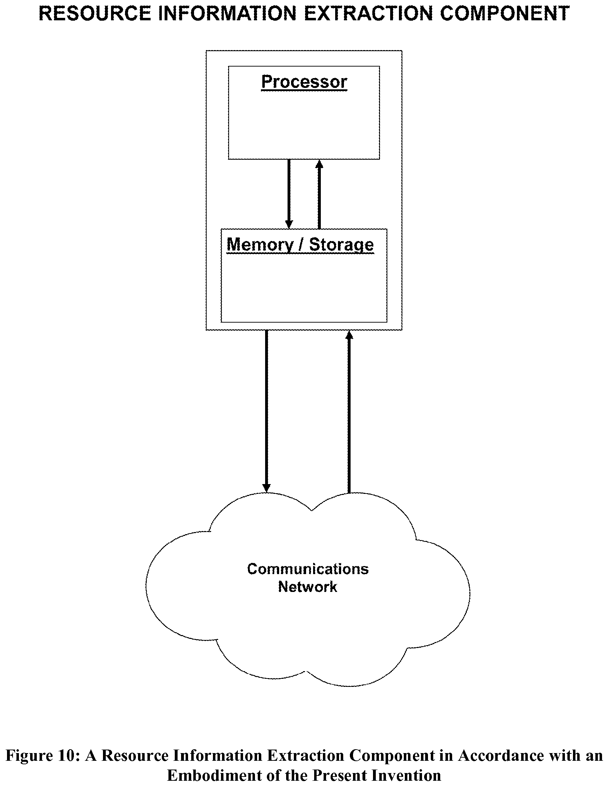

Figure 10 is a resource information extraction component in accordance with an embodiment of the present invention.

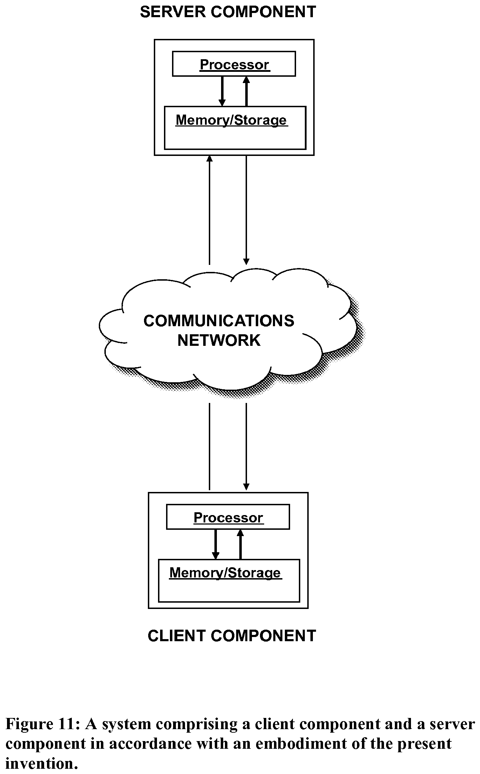

Figure 11 is a system comprising client, server, resource data processing, and results server components in accordance with an embodiment of the present invention.

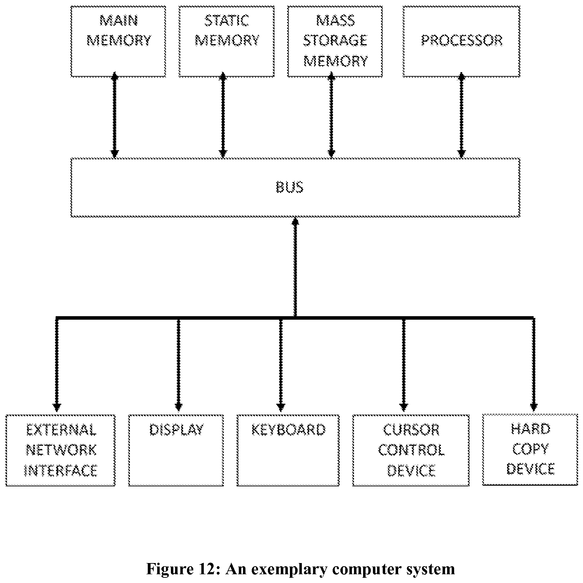

Figure 12 is an exemplary computer system.

### Detailed Description of the Invention

In the following description, numerous details are set forth to provide a more thorough explanation of the present invention. It will be apparent, however, to one of ordinary skill in the art, that the present invention may be practiced without these specific details. In other instances, well-known structures and devices are shown in block diagram form, rather than in detail, in order to avoid obscuring the present invention.

Some portions of the detailed descriptions that follow are presented in terms of algorithms and symbolic representations of operations on data bits within a computer memory. These descriptions and representations are the means used by those skilled in the data processing arts to most effectively convey the substance of their work to others skilled in the art, The steps described herein are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, solid-state disk drives, read-only memories (ROMs), random access memories (RAMs), EPROMs, EEPROMs, magnetic or optical cards, or any type of media suitable for storing electronic instructions, and each coupled to a computer system bus.

The descriptions presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein. A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; electrical, optical, acoustical or other form of propagated signals (e.g., carrier waves, infrared signals, digital signals, etc.); etc.

The description that follows will reference terminology that is generally known in the art, In the art, the term **malware** refers to a malicious software application. Such an application can have a number of nefarious purposes. For example, malware can be used to perform a number of malicious actions. These actions include, but are not limited to: stealing digital information from a victim's machine; using the victim's machine in the perpetration of other malicious activities (such as sending out unsolicited email messages or spam); remotely control the victim's machine; and inhibiting the machine from operating normally. In the art, a **computer virus** is generally considered one example of malicious software. In addition to computer viruses, other types of malware in the art include **Trojans, Worms, Downloaders,** and **Misleading Applications** (also known in the art as **Scareware**). In general, malware is considered to be an undesirable application from the perspective of the end user.

There are numerous techniques known in the art for determining whether a piece of software constitutes malware and for building general purpose systems for detecting the presence of malware on a system. The most common process involves **scanning** a software application. During this operation, the contents of the file corresponding to that application are examined (and if applicable, other pieces of information are also examined, such as the behavioral attributes of that file). If an application is conclusively determined to be malicious (i.e., it corresponds to malware), then it is assigned a **malign** or **bad.** In this case the application is either deleted outright from the system, though typically it is put in a special quarantine location so that it can be restored should there have been an error in calling it malicious.

In the art, the term **signature** references a relatively short sequence of values that can be used to identify if an application is malicious or not In its most general incarnation, the signature is computed as a transformation applied to an entire software application. In the art, a signature is typically computed (e.g., by an anti-malware technology vendor) on a known piece of malware. The signature is either transmitted onto a client's system or it is stored on a server. When a client encounters a new piece of software, it will determine if that software matches the signature either by checking its local data store or by querying a server.

It is understood in the art that a signature can either be specific or generic. If two software applications have the same specific signature, then with overwhelming likelihood, these two applications are entirely identical. One example of a specific signature in the art is a SHA-256 hash. A generic signature permits that possibility that variations on a given application will continue to have the same signature. If an application is taken, and superficial changes are made to it, then the generic signature on this application might continue to be the same as the original whereas a specific signature on it will with extremely high likelihood be different from that computed on the original. One example of a generic signature in the art is the PEhash. Another example of a generic signature in the art is ssdeep.

In the art, the term fingerprint is often associated with a traditional signature and the term **fuzzy fingerprint** is often associated with a generic signature. In the art, the term **conviction** refers to a situation in which a piece of software is identified as malicious on a client system.

Aside from signatures that are computed from the entire binary contents of a file, a signature may also be computed on a certain portion of the file. For example, whether the file contains specific contents at specific locations. A signature can also comprise a fingerprint or the concatenation of a plurality of fingerprints taken from different sections of the files. This technique is used when specific portions of the file are more germane to determining whether that file is likely to be associated with known malicious software.

Note that fingerprints and concatenations of fingerprints can potentially be computed on any file, regardless of whether it is malicious or benign. Fingerprints primarily represent an efficient mechanism whereby one can determine whether the file appears on a list In particular, one computes a fingerprint of a file and then checks a list of pre-computed fingerprints to see if that file appears on the list. (In much the same way, a human fingerprint can be a "compact" mechanism to validate someone's identity.)

Another mechanism in the art by which a file can be determined to be malicious works as follows.

First, a set of **features** are extracted from a particular piece of software. These features can include both static characteristics that can be obtained from the actual binary contents of the file associated with the software, the static characteristics associated with application, and dynamic characteristics that can be determined by actually observing the execution of the software. Examples of static characteristics that can be gleaned directly from the binary contents of the file can include the size of the file, whether it is digitally signed, whether the file seems to contain structured data versus random looking data (with the latter being seen in malware instances where the authors try to obfuscate the operations to evade detection), the size of different sections of the file, and so on. Examples of static characteristics associated with the actual software application, but that cannot be gleaned directly from the static contents of the file, include the file's name, its path (i.e., in what directories and subdirectories it lies), what registry keys are associated with the file, and so on. Finally, dynamic characteristics might include whether the software application has attempted to access the network, whether it has pulled down additional software, whether it has tried to interfere with existing operating system processes, whether it has tried to overwrite any specific system files, and so on.

Second, from this set of features, a **feature vector** is formed. Third, the feature vector is **evaluated.** During this third phase, it is determined whether the features are indicative of the file being malicious versus benign. The actual methods for making this evaluation are orthogonal to the present invention, and are generally understood in the art. From the perspective of this invention, the most relevant piece of data is that a feature vector can be used to determine whether a particular application is malicious.

Resource trajectory systems may by interested in tracking a variety of resources, including, but not limited to files on client systems, file names on client systems, registry keys on client system, network hosts the client system communicated with, email correspondents the client system communicated with, and so on.

Each resource type can be encoded in multiple ways. The ways in which these resources are encoded is orthogonal to the practice of the invention. Any reasonable encoding scheme known in the art can be used, so long as it is used consistently.

In the case of files, as noted above, different encodings can include, but not be limited to: the full file itself, a portion of the file, a (one-to-one) fingerprint computed on the full file, a fuzzy fingerprint computed on the full file, a (one-to-one) fingerprint computed on the partial file, a fuzzy fingerprint computed on the partial file, a feature vector extracted from the file.

Note that multiple encodings can be concatenated together to form a bigger encoding. For example, concatenating multiple partial file fingerprints can be used as an encoding mechanism.

Some operating systems like Microsoft Windows employ the concept of a registry, which is a hierarchical database of keys that encode configuration information, for example, about an application. Applications write keys to the registry on installation and during the course of their operations.

It is known in the art that specific registry keys can be used as an indicator that a particular software application is malicious. Therefore, tracking the trajectory of registry keys can be useful.

Applications might communicate with network hosts, including, but not limited to, web sites on the Internet and Domain Name System (DNS) servers. These hosts can be identified by their domain name or by their Internet Protocol (IP) address. Broader host categories can also be considered - for example, the specific port numbers over which TCP or UDP traffic goes. Information about what resources an application communicated with is interesting because it is known in the art that specific hosts are often associated with malicious activity. For example, if the application in question is a client that is part of a *hot network,* then it may be trying to communicate with a *command and control server* for further commands. If a particular server is known to be a *command and control server,* then any software application that connects to it should be viewed with suspicion.

Along similar lines, it is known in the art that some malware instances engage in specific forms of communication. For example, many bet-infected hosts communicate with their command and control servers over the Internet Relay Chat (IRC) protocol - which often goes over either TCP port 6667 or a port number near to it Although there are legitimate users for IRC, if a system that previously did not appear to have a need to communicate over IRC suddenly starts doing so (e.g., as evidenced by the port number), then this system should be viewed with suspicion (and any visibility into such systems is useful for identifying and mitigating the risk of threats to those systems).

Therefore, it can be useful to track the trajectory of what systems in an organization contacted a particular host.

There are a number of techniques in the art for encoding information about host names. For example, one can encode the top level domain separately from the full path name in the host to facilitate searching for partial string matches.

On a given computer system, each file will have a file name that is independent of its binary contents. It is known in the art that the file name can be a useful indicator regarding whether a particular file is malicious. Some malicious applications use very specific file names, such that if that any future application with that file name should be viewed as suspicious.

There are a number of techniques in the art for encoding file names. For example, one can use generic strings to represent common locations that might contain a user-specific string. So, rather than viewing the strings: C:\UserJoe\Documents\BadFile.exe and C:\UserBob\Documents\BadeFile.exe as two distinct file names (as seen on the machines of users name Joe and Bob, respectively), one can create an encoding of the form C:\GenericUser\Documents\BadFile.exe, that replaces the actual user name with a generic string. Now, if file C:\UserAlice\Documents\BadFile.exe is seen on user Alice's machine, it can be determined that the file name in question is that same as what was seen on Joe's and Bob's machine.

Appealing to many of these methods (e.g., registry keys, file names, host information), may, in and of itself, not be sufficient to draw a conclusive determination about the resource in question. For example, some benign files may share the same file name as a malicious file. However, these attributes still might be useful indicators that warrant additional investigation of the resources in question. Having trajectory information can provide guidance to an organization regarding where to target its efforts when trying to understand the locations of the resource in question.

For each resource in question on a given system, there may be other resources (or categories of resources) that are related to the original resource, and for which it can be desirable to collect information.

For example, in the case of a particular file, information about the parent application that wrote the file to the file system in the first place (i.e., the "dropper") would be of interest. Similarly, any applications that the file wrote to the system (i.e., "dropped" files) would be of interest.

In the case of registry keys, the file or application that created that registry key would be of interest Similarly, in the case of a network host to which a system connected, it would be useful to know which software application made that connection.

The following description will also make use of the concept of a log, which is known in the art. A log is a record of transactions and actions made on a given system. For example, if a system were a web server, then a log would comprise a description of the plurality of clients who connected to the system, the times they connected, and what actions they took. With a log, one can construct a reasonable synopsis of what happened on a given system.

In the context of a resource trajectory reporting system, a log entry could include, but not necessarily be limited to, the following: a client identifier that can be used to link disparate transactions from the same client, a timestamp specifying the time a client identified a particular resource on their system, the location of the client (as specified by its Internet Protocol or IP address), a description of the resource in question (e.g., in the case of a file, the resource could be encoded by a file fingerprint such an MDS or a SHA-256 or even a fuzzy fingerprint), attributes of the resource in question (including, but not limited to a machine learning feature vector of the attributes of the resource of interest), and contextual data about the resource of interest (e.g., in the case of a file, it's parent application would be useful to know as well as any actions associated with that file, like FILE CREATE, FILE MOVE, FILE EXECUTE, and FILE COPY) that would useful in its trajectory report.

Since queries to a server can be complex and multi-faceted, the log entry can also include an entry that specifies a query type. For example, in one query to a server, a client might only include a basic fingerprint. In a subsequent query for the same resource the client might include additional information. These two queries can be recorded separately with different query types (though when analyzing the logs, it might help to link the fact that the same client made two queries about the same resource and for the purposes of additional data mining information from these two transactions can be aggregated and recorded together during a separate post-processing phase). A log would them comprise a plurality of log entries transmitted by a plurality of clients.

In the case of a resource trajectory reporting system that uses a client-server architecture, there may be a plurality of servers to ensure high availability and improve overall reliability, especially in instances where there are too many end users to be serviced by just a single server. Alternatively, there may be different log types (e.g., logs associated with different kinds of resources) and each log type may have a different system associated with it. In these cases, each server may maintain its own logs. For the purpose of additional analysis of these logs, these logs may be combined (e.g., if the logs are stored in files, then these files can be concatenated) so that a single unified view of all transactions during a given time period can be obtained.

Log data can be optionally stratified or partitioned based on different criteria such as whether the users have natural groupings and sub-groupings that can include, but not be limited to, geographic groupings (i.e., the users are from similar locales) and affiliate groupings (that is, the users might be affiliated with each other - for example, they may all be members of the same enterprise or may have acquired the disclosed apparatus through a common source - such as a common download server or common distribution channel).

This scenario is relevant in instances where the vendor providing a resource trajectory reporting system to its customers has different distribution partners - such as Internet Service Providers, Original Equipment Manufacturers, reselling partners, and so on. Here we may wish to treat different logs differently. In these cases, analysis can be performed by concatenating or otherwise combining this plurality of logs.

According to one aspect of the present invention, a system is provided for tracking resource trajectory among a plurality of client computing systems. In addition to the client computing systems, the system also includes client and server components wherein the clients are capable of communicating with the server and the server is capable of communicating with the clients; this communication can happen either directly or indirectly.

The clients extract relevant meta-data from resources of interest; examples of such resources include, but are not limited to, a cryptographic hash function applied to files on the client, a generic or fuzzy hash applied to files on the client, registry keys installed on the client, network hosts that the client communicated with, a set of feature vectors that encode features associated with specific resources (e.g., if the resource is a portable executable file, then the feature vector could comprise attributes of the portable executable header of the file), and so on.

The clients provide the server with information about these resources, including possibly contextual data such as how those resources might have arrived on a particular location in the system (e.g., if the resource is a file, then a relevant attribute would be whether that file is being written to the system the first time, moved from one location on the system to another, or even executed on the system). Each client also provides the server with an identifier so that the server can subsequently determine which resources to associate with which clients.

The server tracks this information, for example, by logging it (the server can also directly store the meta-data in a data store such as a relational database or a NoSQL). The server then takes data from the logs and stores them in a data store for subsequent mining. The data store can be a relational database, a NoSQL data store, or any mechanism that permits additional analysis of this data. Note that the server can directly write to the data store without logging the transaction with the client, but it is generally preferable to maintain a separate log regardless for system maintenance and troubleshooting.

The results server (which can be hosted on the same physical machine instance as the main server, but need not be), provides an end user with an interface from which to request resource information. The user can provide full details about the resource of interest or even partial details (in case the user does not know full details). Information about what resources might be interesting can be derived from other sources; the present invention can be practiced independently of what these other sources are.

The results server will then display information about the results in question to the user. The display would indicate which systems a particular resource is on, as well as any information about that resource over time.

Graphical objects that represent the resources can encode information about the resources in numerous ways, including, but not limited to: the color of the graphical object (e.g., if the resource were a file, we might have red represent that the file is believed to be malicious, green represent that the file is believed to be clean, and grey to represent that the file's disposition is unknown), the shape of the graphical object (e.g., for a file we can use a triangle shape to represent that the file was executed, a circular shape to represent that a file was created, and a square shape to indicate that a file was moved, and different styles of connectors between graphical objects (e.g., in the case of files, a simple directional arrow between two graphical objects would represent that the first file created the second file on the system).

Note that we can have arrows of different styles. For example, a solid arrow can represent a parent-child relationship between files whereas a simple dotted line can be used to represent that two files have the same fuzzy hash, etc.

The layout of the graphical objects themselves can be used to encode additional information. For example, resources identified earlier on the display can be laid out towards the left and resources identified later can be laid out towards the right (i.e., a chronological ordering). Alternatively, the display can be laid out "top-to-bottom" so that chronologically earlier events associated with particular resources are located above chronologically later events associated with those particular resources.

Also, different graphical objects can be used and laid out to represent changes associated with the same resource over time. For example, graphical objects can be laid out left to right as the object changes (e.g., changes over time). In the case of files, the left hand side might show a circle as an indicator that the file was just written to the system; next to the circle, we might have a square to show that the file was copied, and next to the square we might have a triangle to show that the file was now executed. If on execution, the file downloads another file, then that information can be represented as well, etc.

To encode further data, the results server can provide a capability for drilling in for further detail. For example, displaying additional detail when the user's mouse goes over the graphical object. Alternatively, being able to click on the graphical object to display additional detail and then click on the additional detail to see a corresponding report for one of the items. In the context of files, clicking on the graphical object for a given file can be used to display information about "children" files that were written to the system by the initial file, and then clicking on one of the children files can lead to a screen that shows a trajectory report for that one particular file.

According to another aspect of this invention, a **resource information extraction component** is provided Computing-related resource data can be extracted on a client system. On a client system, the **resource information extraction component** can identify resources of interest on the system (e.g., newly downloaded files, new files written to the file system, new registry keys, new network hosts connected to by the system) and extract relevant data about these resources for the purposes of helping to provide subsequent trajectory information. The resources extracted can include: (1) A full file; (2) A partial file; (3) A full-file one-to-one fingerprint (i.e., a small fingerprint that can be used to identify the file and that we expect to be unique such as a SHA-256 hash of the file); (4) A full-file fuzzy fingerprint (a fuzzy fingerprint allows for a many-to-one match); (5) A full registry key on the system; (6) A partial registry key on the system; (7) A full network host that the system in question communicated with; (8) partial information about a network host that the system in question communicated with (e.g., a domain name such as www.example.com versus www.example.com/pathl/path2/file.html); (5) contextual information about how that resource, such as how it might have arrived on the system in the first place (e.g., in the case of a file, information about the parent file that was responsible for that file being written can be recorded); (6) information about related resources (e.g., in the case of file, information about other files on that system that might have been written to the file system recently); (7) A feature vector comprising a set of static and dynamic features extracted from the file itself as well as determined by examining the file's behavior; metadata can range from a few select features of the file all the way to the binary contents of the file itself. The metadata can also include contextual information from the system. For example, in the case of a file, it can include the parent file that wrote that particular file onto the system or alternatively "child" files that were written to the system by the original file. In the case of a registry key, the meta data can include what files create a particular registry key (and also what registry keys were created by a given file). In the case of network activity, the metadata can include what applications/files communicated with a particular network host or whether particular hosts were used to download/write new files to the system. The metadata, including possibly the whole file, as well as a user identifier is passed to a server-side component.

According to another aspect of the present invention, a server-side **logging component** receives data from a **resource information extraction component** and logs this information together with any additional transactional information such as a timestamp (computed by the server) for when this data was received. The invention can be practiced with any method of communication between the clients) and servers; e.g., by piggybacking on a standard protocol such as the Hypertext Transfer Protocol (HTTP) or the User Data Program Protocol (UDP) or alternatively any non-standard protocol for transmitting network messages. This server-side logging component should also receive a client identifier to help identify which system transmitted the resource information provided by the resource information extraction component. This component will take the information passed by the resource information extraction component and extract out its constituent entries (e.g., resource identifier, resource meta-data, contextual information, user identifier, etc.), and log the information together with timestamp (as computed by the server). The data will be logged to facilitate future analysis of this information. For example, the client identifier and timestamp should each be recorded as separate fields on a given row of the log and the resource information should be logged in a format that can be easily parsed and analyzed. For example, information about each resource can be stored in a separate field or if some form of nesting or hierarchy is needed, then the resource information can be stored as a JSON blob.

The logging component will effectively have a record of what resources reside on what end user systems and more specifically, the time that those resources were recorded to be on those systems. The logging component can take apart the log data into its constituent components and stored in a relational database, such as MySQL, Oracle, DB2, or SQL Server. In another aspect, the log data can be provided to a NoSQL techonology, of which many are known in the art including, but not limited to, Cassandra, MongoDB, CouchDB, Riak, HBase, HIVE, Membase, Neo4j, and Redis. To effectively use such NoSQL technologies, it may be necessary to modify the format of the logs so that they can easily be processed by them. Possible ways to store log data include the Apache Log Format, Character-Delimited Separated Key-Value Pairs, JavaScript Object Notation (JSON), or Extensible Markup Language (XML).

According to another aspect of the present invention is a server-side **data processing module** that examines data from the **logging component** and performs initial processing on the data for future analysis. This component analyzes one or more log files, and first extracts out resource information, resource metadata, contextual resource information, and client identifier data; second, this component performs initial processing of that data to facilitate future reporting. Third, this component next cross-references information about this resource with any back-end intelligence about this resource (e.g., if the resource is a file, then it can be checked whether that file appears on any blacklists of known malware or if it appears on any whitelisis of known clean files or what the file's prevalence is among a global population of users, either as a numeric value or a qualitative value like "very popular", "slightly popular", "unpopular", "never seen before"). Alternatively, if the resource is a registry key, then it can be determined whether that registry key was created by a known piece of malware. If the resource is a network host, then information about whether that host has previously been associated with malicious activity can be recorded as can any other metadata about the host (such as the geographic locale of the host or how long the host has been up and running). These results are then stored in a **results data store** that can be accessed by the **results server module.** The results can be stored in a relational database, such as MySQL, Oracle, DB2, or SQL Server. In another aspect, results can be stored in a NoSQL techonology, of which many are known in the art including, but not limited to, Cassandra, MongoDB, CouchDB, Riak, HBase, HIVE, Membase, Neo4j, and Redis. To effectively use such NoSQL technologies, it may be necessary to modify the format of the logs so that they can easily be processed by them. Possible ways to store log data include the Apache Log Format, Character-Delimited Separated Key-Value Pairs, JavaScript Object Notation (JSON), or Extensible Markup Language (XML).

According to another aspect of the present invention is a **results server module** that can access data from the **results data store** and provides a report on that data, possibly in response to a user-initiated query. For a particular resource, the report provides the following information (or any subset of this information): what endpoint systems have this particular resource, when that resource was first detected on that system, any actions associated with that resource on that system, how that resource arrived on that system, any other resources related to the original resource, what is known about that resource (e.g., whether or not that resource has been associated with malicious activity).

The report itself comprises a number of graphical objects and text objects laid out to provide such resource trajectory information, with an understanding that it is desirable to have a layout that provides an efficient way to transmit this information, and as such that does not take up an excessive amount of space.

The graphical and textual elements can be interactive. For example, additional information can be provided if the elements are clicked on, or if the mouse is moved over them, or if a mouse right-click is performed on them.

Some graphical elements may be hidden, in which case the user would be required to click on one specific graphical element to expand the view and display additional graphical elements.

Some of the graphical and textual elements can themselves be clicked on to generate a separate report. For example, if the resource in question is a file, then the initial report might include information about its parent: file (where the parent file wrote the file in question to the file system). The user can then drill in on the information displayed about the parent file (e.g., by clicking on it with their mouse or tapping on it in the case of a touch screen, etc.) and can thus generate a separate trajectory report for it. In this case, the second report can be opened up in either a separate screen or over the same screen. In one embodiment of the present invention, the report can be a file containing HTML and JavaScript code, and be rendered in a web browser such as Internet Explorer, Firefox, or Chrome. If a web browser such as Internet Explorer, Firefox, or the Chrome Browser is being used to view the report, then the results can be opened up in a separate tab on the browser.

Graphical objects that represent the resources can encode information about these resources in numerous ways, including, but not limited to: the color of the graphical object (e.g., if the resource were a file, we might have red represent that the file is believed to be malicious, green represent that the file is believed to be clean, and grey to represent that the file's disposition is unknown), the shape of the graphical object (e.g., for a file we can use a triangle shape to represent that the file was executed, a circular shape to represent that a file was created, and a square shape to indicate that a file was moved, and different styles of connectors between graphical objects (e.g., in the case of files, a simple directional arrow between two graphical objects would represent that the first file created the second file on the system), movement/animation of the object.

We can have arrows of different styles. For example, a solid arrow can represent a parent-child relationship between files whereas a simple dotted line can be used to represent that two files have the same fuzzy hash, etc. Multiple arrows can be used to connect two graphical elements representing resources.

The layout of the graphical objects themselves can be used to encode additional information. For example, resources identified earlier can be laid out towards the top and resources identified later can be laid out towards the bottom (i.e., a chronological ordering).

Also, different graphical objects can be used and laid out to represent changes associated with the same resource over time. For example, graphical objects can be laid out left to right to indicate changes to the same resource over time. In the case of files, the left hand side might show a circle as an indicator that the file was just written to the system; next to the circle, we might have a square to show that the file was copied, and next to the square we might have a triangle to show that the file was now executed. If, on execution, the file downloads another file, then that can be represented as well, etc.

To encode further data, the results server can provide a capability for drilling in for further detail. For example, displaying additional detail when the user's mouse goes over the graphical object. Alternatively, being able to click on the graphical object with a mouse (or tapping on a touch screen) to display additional detail and then click on the additional detail to see a corresponding report for one of the items. In the context of files, clicking on the graphical object for a given file can be used to display information about "children" files that were written to the system by the initial file, and then clicking on one of the children files can lead to a screen that shows a trajectory report for that one particular file.

According to another aspect of the present invention, a resource Information extraction method is provided for extracting relevant resource data from a given endpoint system in a way that allows for subsequent analysis of resource trajectory. This method can be executed on a client (in which case the corresponding resource data can be transmitted to a server), or can be executed on a server (in which case the resource would be transmitted from a client to a server first; for example, if the resource of interest is a file, then either a fingerprint can be computed directly on the file and transmitted to a server or the entire file can be transmitted to the server and the server itself can extract a fingerprint), or some combination thereof (e.g., some pieces of data related to the resource can be collected on the client, and other pieces of data can be extracted on a server). The method comprises the following steps. First, the endpoint system should generally be monitoring and recording system activities. Second, if a resource of interest is identified (where the definition of whether a resource is interesting can be established in a pre-defined policy), then data about this resource can be collected and transmitted to the server. In the case of the resource being a file on die Microsoft Windows Operating System, the steps in this method can be implemented as follows. The client system can have running on it a filesystem mini-filter driver that tracks file input-output activity (e.g., FILE CREATE, FILE MOVE, FILE EXECUTE, FILE COPY). When this driver detects file input-output activity, it can first look up the parent process of the file, Second, it can compute one or more of the following attributes: one or more cryptographic digests of the file; one or more fuzzy fingerprints of the file; one or more machine learning feature vectors associated with the file; information about any network activity associated with the file (collected by some other mechanism); information about any registry keys installed by the file: information about any files created by the file. Third, these attributes together with the client's identifier can be sent to the server.

In the case of extracting out registry key data, an analogous procedure can be used, except for registry keys. Similarly, for extracting data about hosts with which the process associated with the file communicated, an analogous procedure can be used.

There is a tradeoff between the choice to execute the information extraction method on the client versus the server; transmitting more data to a server incurs a bandwidth cost, but on the flip side leaves open the door for more possibilities around what data can be extracted without necessitating a change to each endpoint executing the resource information extraction method. The method is carried out by processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a method is provided for **logging resource data** on a server and storing it in a way that facilitates reporting on resource trajectory. In one embodiment of the present invention, this method will be performed on the server by processing logic that may comprise hardware (e.g., circuitry, dedicated logic, etc.), software (such as is run on a general purpose computer system or a dedicated machine), or a combination of both.

The **resource data logging method** comprises the following steps. First, the server receives network packets containing information and metadata about a resource from a client (e.g., over a network interface). Second, these packets are decoded. Any information about the machine identifier (e.g., a GUID) is extracted and all the underlying fingerprints and resource metadata fields are extracted. Third, a server-side timestamp is computed specifying when the information was received. Fourth, any connection information (e.g., IP address or netblock) associated with the client is collected. Fourth, a resource information vector is formed comprising the resource and resource metadata information, machine identifier, timestamp, and connection information. Fifth, the information in this vector is recorded in a log file or traditional database or in a NoSQL datastore or in a key-value datastore or some combination thereof.

It is to be understood, however, that the choice of where and how the resource data logging method is performed is not to be limited by the present description, and it should be apparent to a person of ordinary skill in the art that many such choices exist.

According to another aspect of the present invention, a method is provided for processing data on a server and storing that data in a data store in a manner that facilitates determining resource trajectory. The method comprises the following steps. First resource information, resource metadata information, contextual resource information, and machine identifiers are extracted from resource logs. Second, this data is arranged to facilitate future reporting (e.g., all systems associated with a particular resource are identified). Third, information about the underlying resource is cross referenced with any back-end intelligence. For example, if the resource is a file, then it can be checked whether that file appears on any blacklists of known malware or if it appears on any whitelists of known clean files or what the file's prevalence is among a global population of users, either as a numeric value or a qualitative value like "very popular", "slightly popular", "unpopular", "never seen before"). Alternatively, if the resource is a registry key, then it can be determined whether that registry key was created by a known piece of malware. If the resource is a network host, then information about whether that host has previously been associated with malicious activity can be recorded as can any other metadata about the host (such as the geographic locale of the host or how long the host has been up and running). Fourth, these results are then stored in a **results data store** that can be accessed by the **results server module.** The results can be stored in a relational database, such as MySQL, Oracle, DB2, or SQL Server. In another aspect, results can be stored in a NoSQL techonology, of which many are known in the art including, but not limited to, Cassandra, MongoDB, CouchDB, Riak, HBase, HIVE, Membase, Neo4j, and Redis. To effectively use such NoSQL technologies, it may be necessary to modify the format of the logs so that they can easily be processed by them. Possible ways to store log data include the Apache Log Format, Character-Delimited Separated Key-Value Pairs, JavaScript Object Notation (JSON), or Extensible Markup Language (XML).

In one embodiment of the present invention, this method will be performed by processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a method is provided for taking resource data stored in a data store and producing trajectory reports on that data. This method can be executed on a server (in which case the all reports are created and displayed on a server), or can be executed on a client (in which case the data to generate the report would first be transmitted to the client and the client would create and render the report), or some combination thereof (e.g., the report can be generated on a server and transmitted to a client that renders it; in this case, the server might be a web server that generates HTML and JavaScript code that is transmitted to a client and the client can render that code within a web browser).

This **resource data reporting method** comprises the following steps. First, resource information is extracted from the results data store. Second, a description of how this resource information is to be laid out is constructed. Third, a description of what elements to make visible and what elements require additional interaction (to obtain more detail) is provided. Fourth, a description of the graphical objects used to depict resource information is provided, including, but not limited to, the type or shape of the object, the size of the object, the color of the object, connectors (and connector styles) between objects.

In one embodiment of the present invention, this resource data reporting method will be performed using processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and should be apparent to a person of ordinary skill in the art that many such choices exist.

According to another aspect of the present invention is a server-side **data processing module** that examines data from the **logging component** and performs initial processing on the data for future analysis. This component analyzes one or more log files, extracts out resource fields, performs initial processing of that data to facilitate future reporting. This component also cross references information about this resource with any back-end intelligence about this resource (e.g., if the resource is a file, then it can be checked: (1) whether that file appears on any blacklists of known malware; (2) if it appears on any whitelists of known clean files; (3) if it possesses any characteristics that allow one to either make a conclusive determination or at least a risk assessment; (4) what the prevalence of this file is among a larger community of users - even if this prevalence is an approximate or qualitative value, like "never seen before", "seen rarely", "moderately popular", "very popular", and so on; (5) the first time this file was seen among a larger community of users) and then stores the results in a **results data store** that can be accessed by the **results server module.**

According to another aspect of the present invention is a **results server module** that can access data from the results data store and provides a report on that data, possibly in response to a user-initiated query. For a particular resource, the report provides the following information (or any subset of this information): what endpoint systems have this particular resource, when that resource was first detected on that system, any actions associated with that resource on that system, and information about how that resource arrived on that system.

The report can be interactive; for example, rather than displaying the full breadth of information up front, it can provide a condensed summary view, and require the user click on that view or to hover their mouse over the appropriate location to expand it for more information. Moreover, some of that information can itself be clicked on to generate a separate report. For example, if the resource in question is a file, then the initial report might include information about its parent file (where the parent file wrote the file in question to the file system). The user can then drill in on the information displayed about the parent file (e.g., by clicking on it with their mouse or tapping on it in the case of a touch screen, etc.) and can thus generate a separate trajectory report for it

According to another aspect of the present invention, a **resource information extraction method** is provided for extracting relevant resource data from a given endpoint system in a way that allows for subsequent analysis of resource trajectory. This method can be executed on a client (in which case the corresponding resource data can be transmitted to a server), or can be executed on a server (in which case the resource would be transmitted from a client to a server first; for example, if the resource of interest is a file, then either a fingerprint can be computed directly on the file and transmitted to a server or the entire file can be transmitted to server and the server itself can extract a fingerprint), or some combination thereof (e.g., some pieces of data related to the resource can be collected on the client, and other pieces of data can be extracted on a server).

Note that there is a tradeoff between bandwidth costs and flexibility; transmitting more data to a server incurs a bandwidth cost, but on the flip side leaves open the door for more possibilities around what data can be extracted without necessitating a change to the processing logic located on each endpoint executing the resource information extraction method.

The method is carried out by processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a method is provided for logging resource data on a server and storing it in a way that facilitates reporting on resource trajectory. In one embodiment of the present invention, this method will be performed on the server by processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a method is provided for processing data on a server and storing that data in a data store in a manner that facilitates determining resource trajectory. In one embodiment of the present invention, this method will be performed processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

According to another aspect of the present invention, a method is provided for taking resource data stored in a data store and producing trajectory reports on that data. This method can be executed on a server (in which case the all reports are created and displayed on a server), or can be executed on a client (in which case the data to generate the report would first be transmitted to the client and the client would create and render the report), or some combination thereof (e.g., the report can be generated on a server and transmitted to a client that renders it; in this case, the server might be a web server that generates HTML and JavaScript code that is transmitted to a client and the client can render that code within a web browser). In one embodiment of the present invention, this method will be performed on processing logic that may comprise hardware (e.g., circuitry, dedicated logic, etc.), software (such as is run on a general purpose computer system or a dedicated machine), or a combination of both. It is to be understood, however, that the choice of where and how the method is performed is not to be limited by the present description, and it should be apparent to a person of ordinary skill in the art that many such choices exist.

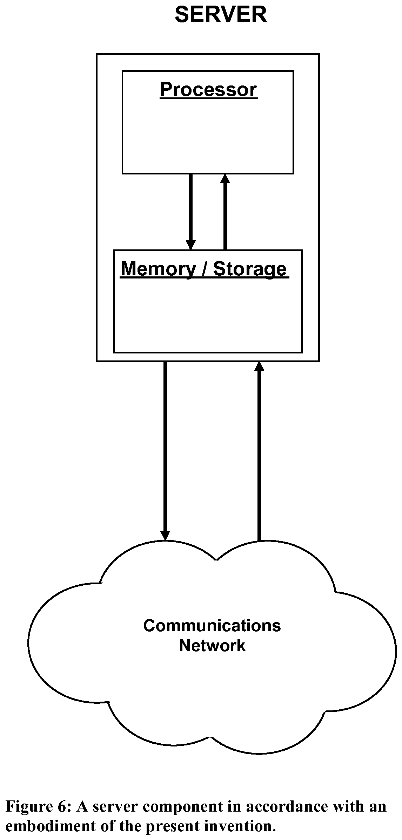

Figure 6 is a block diagram of an exemplary computer system that may perform one or more of the operations described herein. Referring to Figure 6, the computer system may comprise an exemplary client or server computer system. The computer system comprises a communication mechanism or bus for communicating information, and a processor coupled with a bus for processing information. The processor includes a microprocessor, but is not limited to a microprocessor, such as, for example, Pentium, PowerPC, Alpha, etc. The system further comprises a random access memory (RAM), or other dynamic storage device (referred to as main memory) coupled to the bus for storing information and instructions to be executed by the processor. Main memory also may be used for storing temporary variables or other intermediate information during execution of instructions by the processor.

The computer system also comprises a read only memory (ROM) and/or other static storage device coupled to the bus for storing static information and instructions for the processor, and a data storage device, such as a magnetic disk or optical disk and its corresponding disk drive. The data storage device is coupled to the bus for storing information and instructions. The computer system may further be coupled to a display device, such as a cathode ray tube (CRT) or liquid crystal display (CD), coupled to the bus for displaying information to a computer user. An alphanumeric input device, including alphanumeric and other keys, may also be coupled to the bus for communicating information and command selections to the processor. An additional user input device is cursor control, such as a mouse, trackball, trackpad, stylus, or cursor direction keys, coupled to the bus for communicating direction information and command selections to the processor, and for controlling cursor movement on the display. Another device that may be coupled to the bus is a hard copy device, which may be used for printing instructions, data, or other information on a medium such as paper, film, or similar types of media. Furthermore, a sound recording and playback device, such as a speaker and/or microphone may optionally be coupled to the bus for audio interfacing with the computer system. Another device that may be coupled to the bus is a wired/wireless communication capability to communication to a phone or handheld palm device.

Note that any or all of the components of the system and associated hardware may be used in the present invention. However, it can be appreciated that other configurations of the computer system may include some or all of the devices.

### Example 1

This example illustrates a specific instance of the invention, describing the steps and actions along the way. This example is provided to help clarify the description, and it should not be considered limiting in any way. For example, the above invention description covers many variations and extensions. To avoid obscuring the example, these variations and extensions are not discussed below.

To begin, consider a piece of agent software running on a user's machine. According to this example, the agent software contains a Microsoft Windows™ (kernel-level) filesystem mini-filter driver that can detect when a file is being written to the file system, moved from one location to another, or executed on that file system. Other software that can detect when an executable file is being written to the file system can also be used.

Following notification that there has been or is an attempt to write a file to the file system, the software agent can track and log information about the file on the system, such as its location in the file system, whether or not it has been moved (along with the time and locations in the file system), whether or not it has been executed (along with the time of the execution), or copied (along with the time and location of the copy), whether or not that file has created other files (along with information about what those files are), and so on. This information will be helpful if the file deemed to be malicious and subsequently needs to be removed.

In addition, the agent computes several values. First, computes "traditional" fingerprints, such as a SHA-256, on the file. In addition, it can compute a machine learning feature vector from the file. The feature vector will comprise a number of attributes associated with the file on this system, including, but not limited to: which DLLs are referenced by the application, the values of specific positions of the binary contents, the number of sections in the file (and any attributes associated with those sections - such as whether it is readable, writeable, or executable), the number of symbols, the size of the binary, whether the binary is digitally signed, etc. All of these attributes are easily computed from the binary contents of the file.

In addition, other contextual pieces of information are included in the feature vector, including, but not limited to, the file system timestamp, properties of the filename (note that the same file may have different names on different systems, so this attribute is specific to an instance of the file on a given system), information about other software applications installed on the system (e.g., whether the system has any vulnerable software or software that commonly leads to a system infection, etc.), and recent infection history of the system (e.g., such as whether the user experienced any infections in the last half an hour). These attributes are be encoded appropriately, and compressed as well (for compact transmission).

The client then sends these values to a server. The client can log any information that is sent to the server so that this information can be subsequently cross referenced if necessary.

The server, in turn, can log the details of the transaction, including, but not limited to, a timestamp specifying when the transaction took place, a client identifier (which is a string that can help uniquely identify the client), the various fingerprints used, and an encoding of the final disposition associated with the file at the time of the transaction (i.e., good/bad/unknown).

Note that in these cases, the server can rely solely on the meta-data provided by the client (and so does not need to possess a copy of the actual full binary contents of the file, although many of meta-data features that the client extracts could also, in principle, be extracted on the server if it is provided with a binary copy of the file).

The metadata and any additional computations performed by the server can be saved and used subsequently to produce trajectory reports.

The data processing component would then: (1) take these log files, collating them if necessary; (2) queue them up for processing; (3) parse out the different fields of the next log file in the queue to be processed; (4) optionally cross reference any existing data sources for information about the resource (e.g., in the case of a file, one can check if the file appears on any known whitelists or blacklists, or has a disposition that can be gleaned from the provided attributes; in addition, one can search other information about the file, such as when it was first seen among a larger community of users to which the system has access and how prevalent the file is among a broader community); (5) insert the entries into the results data store, which in one embodiment could be an appropriately configured MySQL database or a NoSQL data store.

When a user is interested in seeing a trajectory report for a given resource, he or she would (1) connect to the results server, which can be implemented as an HTTP web server, using web server technology such as Apache; (2) provide any log-in credentials; (3) Be presented with an HTML form where the resource information could be entered (alternatively, the resource information can appear elsewhere, such as being encoded in a hyperlink, in which case the user would "request" a report for that resource by clicking on the hyperlink).

The results server would fetch the relevant records in the results data store, specifically records that include a reference to the resource in question. If no prior cross referencing of resource data was done against existing intelligence, then this operation can be performed now (e.g., in the case of a file, determine its prevalence among a larger set of users or determine the first time it was seen among a larger set of user, or even come up with a disposition associated with the file, such as whether it is benign or malicious).

The results server would create a file containing code that can be rendered in a web browser (e.g., HTML or JavaScript) that provides a visualization of this resource data.

The systems on which the resource was found could be displayed vertically, and detailed information about each resource on that system could be displayed horizontally (where information on the left hand side would represent chronologically earlier events).

For the case of files, each endpoint system on which a file was found would be displayed vertically. For each system, the actions associated with that file would be listed horizontally in chronological order. Typically, the first event associated with a file would be that associated with the first time that file was written to the file system. Subsequently, there may be a number of FILE MOVE, FILE COPY, and FILE EXECUTE operations. Each of those operations could be listed with a different graphical symbol being used to depict each operation. If the files are known to be malicious or benign (or have unknown disposition), this information could be depicted through a color-based encoding (e.g., red for malicious, grey or blue for unknown, and green for benign).

The report is generated such that a user can either do a mouse over or click on each resource (or each action associated with a resource) for additional information. For example, clicking on the icon associated with a FILE EXECUTE can indicate whether any new files were dropped by the original file, together with enough information about the file to retrieve a report for its trajectory (alternatively, a hyperlink or similar mechanism can be included so that a user can simply click on the file to get more data regarding it).

If, through interacting with the report, the user requests additional information about a related resource then a separate report can be generated about that related resource. The report can be opened up either in a new web browser window or in a new web browser tab (for browsers that support a tab view).

Whereas many alterations and modifications of the present invention will no doubt become apparent to a person of ordinary skill in the art after having read the foregoing description, it is to be understood that any particular embodiment shown and described by way of illustration is in no way intended to be considered limiting.

## Claims

1. A method for processing data on a server device, the method comprising:
(a) receiving at the server device at least one log file relating to resources of interest on a client device, the resources of interest comprising at least one of a new file on the client device, a new registry key on the client device, and a new network host with which the client device communicated;
(b) in response to a resource of interest being a new file:
determining at the server device whether the new file is on a blacklist of known malware or on a whitelist of known clean files based on a full-file fingerprint extracted from the at least one log file;
determining whether the new file is malicious based on a feature vector of the new file extracted from the at least one log file;
determining a prevalence of the new file among a community of client devices based on a numeric count of other client devices having the new file; and
determining a first time the new file was detected on a client device within the community of client devices;
(c) in response to a resource of interest being a registry key:
determining at the server device whether the registry key was created by a known piece of malware;
(d) in response to a resource of interest being a new network host with which the client device communicated:
determining at the server device whether the new host has previously been associated with malicious activity; and
(e) generating at the server device an interactive report indicative of a presence or absence of malware on the client device based on (b) - (d), wherein the interactive report provides an initial summary view for the resource of interest and, upon being clicked, the interactive report expands into a detailed trajectory report for the resource of interest that includes events associates with the resource of interest.

2. A method according to claim 1, wherein the feature vector comprises static and dynamic characteristics of the file.

3. A method according to claim 2, wherein the dynamic characteristics of the new file are characteristics associated with execution of the new file.

4. A method according to any preceding claim, wherein determining the prevalence of the new file among a community of client devices comprises categorizing the new file into one of a plurality of popularity categories based on the numeric count of other client devices having the new file.

5. A method according to any preceding claim, wherein the full-file fingerprint is a full-file one-to-one fingerprint.

6. A method according to any one of claims 1 to 4, wherein the full-file fingerprint is a full-file fuzzy fingerprint.

7. A method according to any preceding claims, wherein the registry key is a full registry key.

8. An apparatus comprising:
a memory or storage device; and
a processor configured to perform all steps of a method according to any one of the preceding claims.

9. An apparatus according to claim 8, wherein the processor is configured to store the report in the memory or storage device.

10. A computer readable medium including executable instructions which, when executed in a processing system, cause the processing system to perform all steps of a method according to any one of claims 1 to 7.

## Patentansprüche

1. Verfahren zum Verarbeiten von Daten auf einem Servergerät, wobei das Verfahren Folgendes beinhaltet:
(a) Empfangen, an dem Servergerät, wenigstens einer Log-Datei in Bezug auf Ressourcen von Interesse auf einem Client-Gerät, wobei die Ressourcen von Interesse wenigstens eines aus einer neuen Datei auf dem Client-Gerät, einem neuen Registrierungsschlüssel auf dem Client-Gerät und einem neuen Netzwerk-Host umfassen, mit dem das Client-Gerät kommuniziert hat;
(b) als Reaktion darauf, dass eine Ressource von Interesse eine neue Datei ist:
Feststellen, am Servergerät, auf der Basis eines von der wenigstens einen Log-Datei extrahierten Fingerabdrucks einer vollständigen Datei, ob die neue Datei auf einer Blacklist von bekannter Malware oder auf einer Whitelist von bekannten sauberen Dateien ist;
Feststellen auf der Basis eines Merkmalsvektors der von der wenigstens einen Log-Datei extrahierten neuen Datei, ob die neue Datei bösartig ist;
Bestimmen einer Prävalenz der neuen Datei unter einer Gemeinschaft von Client-Geräten auf der Basis einer numerischen Anzahl von anderen Client-Geräten mit der neuen Datei; und
Bestimmen eines ersten Mals, dass die neue Datei auf einem Client-Gerät in der Gemeinschaft von Client-Geräten erkannt wurde;
(c) als Reaktion darauf, dass eine Ressource von Interesse ein Registrierungsschlüssel ist;
Feststellen am Server-Gerät, ob der Registrierungsschlüssel von einem bekannten Stück Malware erzeugt wurde;
(d) als Reaktion darauf, dass eine Ressource von Interesse ein neuer Netzwerk-Host ist, mit dem das Client-Gerät kommuniziert hat:
Feststellen, am Servergerät, ob der neue Host zuvor mit bösartiger Aktivität assoziiert war; und
(e) Erzeugen, am Servergerät, eines interaktiven Berichts, der die An- oder Abwesenheit von Malware auf dem Client-Gerät anzeigt, auf der Basis von (b) - (d), wobei der interaktive Bericht eine anfängliche Zusammenfassungsübersicht für die Ressource von Interesse bereitstellt und der interaktive Bericht nach dem Anklicken zu einem detaillierten Verlaufsbericht für die Ressource von Interesse erweitert wird, der mit der Ressource von Interesse assoziierte Ereignisse beinhaltet.

2. Verfahren nach Anspruch 1, wobei der Merkmalsvektor statische und dynamische Charakteristiken der Datei umfasst.

3. Verfahren nach Anspruch 2, wobei die dynamischen Charakteristiken der neuen Datei mit der Ausführung der neuen Datei assoziierte Charakteristiken sind.

4. Verfahren nach einem vorherigen Anspruch, wobei das Bestimmen der Prävalenz der neuen Datei unter einer Gemeinschaft von Client-Geräten das Kategorisieren der neuen Datei in eine von mehreren Popularitätskategorien auf der Basis der numerischen Anzahl von anderen Client-Geräten mit der neuen Datei beinhaltet.

5. Verfahren nach einem vorherigen Anspruch, wobei der Volldatei-Fingerabdruck ein Eins-zu-Eins-Volldatei-Fingerabdruck ist.

6. Verfahren nach einem der Ansprüche 1 bis 4, wobei der Volldatei-Fingerabdruck ein Fuzzy-Volldatei-Fingerabdruck ist.

7. Verfahren nach einem vorherigen Anspruch, wobei der Registrierungsschlüssel ein voller Registrierungsschlüssel ist.

8. Vorrichtung, die Folgendes umfasst:
einen Memory oder ein Speichergerät; und
einen Prozessor, konfiguriert zum Durchführen aller Schritte eines Verfahrens nach einem der vorherigen Ansprüche.

9. Vorrichtung nach Anspruch 8, wobei der Prozessor zum Speichern des Berichts in dem Memory oder Speichergerät konfiguriert ist.

10. Computerlesbares Medium, das ausführbare Befehle enthält, die bei Ausführung in einem Verarbeitungssystem bewirken, dass das Verarbeitungssystem alle Schritte eines Verfahrens nach einem der Ansprüche 1 bis 7 durchführt.

## Revendications

1. Procédé de traitement de données sur un dispositif serveur, le procédé comportant les étapes consistant à :
(a) recevoir au niveau du dispositif serveur au moins un fichier journal se rapportant à des ressources d'intérêt sur un dispositif client, les ressources d'intérêt comportant au moins l'un parmi un nouveau fichier sur le dispositif client, une nouvelle clé de registre sur le dispositif client, et un nouvel hôte de réseau avec lequel le dispositif client a communiqué ;
(b) en réponse à une ressource d'intérêt qui est un nouveau fichier :
déterminer au niveau du dispositif serveur si le nouveau fichier est sur une liste noire de logiciels malveillants connus ou sur une liste blanche de fichiers propres connus en se basant sur une empreinte de fichier complet extraite en provenance dudit au moins un fichier journal ;
déterminer si le nouveau fichier est malveillant en se basant sur un vecteur de caractéristiques du nouveau fichier extrait en provenance dudit au moins un fichier journal ;
déterminer une prévalence du nouveau fichier parmi une communauté de dispositifs clients en se basant sur un décompte numérique d'autres dispositifs clients ayant le nouveau fichier ; et
déterminer une première fois lors de laquelle le nouveau fichier a été détecté sur un dispositif client au sein de la communauté de dispositifs clients ;
(c) en réponse à une ressource d'intérêt qui est une clé de registre :
déterminer au niveau du dispositif serveur si la clé de registre a été créée par un élément connu de logiciel malveillant ;
(d) en réponse à une ressource d'intérêt qui est un nouvel hôte de réseau avec lequel le dispositif client a communiqué :
déterminer au niveau du dispositif serveur si le nouvel hôte a été précédemment associé à une activité malveillante ; et
(e) générer au niveau du dispositif serveur un rapport interactif qui indique une présence ou une absence de logiciel malveillant sur le dispositif client en se basant sur (b) - (d), dans lequel le rapport interactif fournit une vue sommaire initiale pour la ressource d'intérêt et, sous l'effet d'un clic, le rapport interactif se déploie en un rapport de trajectoire détaillé pour la ressource d'intérêt qui comprend des événements associés à la ressource d'intérêt.

2. Procédé selon la revendication 1, dans lequel le vecteur de caractéristiques comporte des caractéristiques statiques et dynamiques du ficher.

3. Procédé selon la revendication 2, dans lequel les caractéristiques dynamiques du nouveau fichier sont des caractéristiques associées à l'exécution du nouveau fichier.

4. Procédé selon l'une quelconque des revendications précédentes, dans lequel l'étape consistant à déterminer la prévalence du nouveau fichier parmi une communauté de dispositifs clients comporte l'étape consistant à catégoriser le nouveau fichier en l'une d'une pluralité de catégories de popularité en se basant sur le décompte numérique d'autres dispositifs clients ayant le nouveau fichier.

5. Procédé selon l'une quelconque des revendications précédentes, dans lequel l'empreinte de fichier complet est une empreinte de type une à une de fichier complet.

6. Procédé selon l'une quelconque des revendications 1 à 4, dans lequel l'empreinte de fichier complet est une empreinte de type flou de fichier complet.

7. Procédé selon l'une quelconque des revendications précédentes, dans lequel la clé de registre est une clé de registre entière.

8. Appareil comportant :
une mémoire ou un dispositif de stockage ; et
un processeur configuré pour effectuer toutes les étapes d'un procédé selon l'une quelconque des revendications précédentes.

9. Appareil selon la revendication 8, dans lequel le processeur est configuré pour stocker le rapport dans la mémoire ou dans un dispositif de stockage.

10. Support lisible par ordinateur comprenant des instructions en mesure d'être exécutées qui, quand elles sont exécutées dans un système de traitement, amènent le système de traitement à effectuer toutes les étapes d'un procédé selon l'une quelconque des revendications 1 à 7.
